# EUROPÄISCHE PATENTANMELDUNG

(11) **EP 1 731 938 A1**
(43) Veröffentlichungstag der Anmeldung: **13.12.2006**
(21) Anmeldenummer: 05012123.5
(22) Anmeldetag: 06.06.2005
(51) Int. Cl.: G02B 6/42

(54) **Einkoppelvorrichtung für ein Festkörper-Lasergerät**

(71) Anmelder: TRUMPF Laser GmbH + Co. KG, 78713 Schramberg (DE)
(72) Erfinder: Notheis, Thomas, 78712 Schramberg (DE); Döttling, Jürgen, 78713 Schramberg (DE); Schuler, Lutz, 78112 St. Georgen (DE)
(74) Vertreter: Kohler Schmid Möbus

(57) **Zusammenfassung**

Bei einer Vorrichtung (1) zum Einkoppeln eines Laserstrahls (2) in ein Laserlichtkabel (3) mit einem Kabelanschluss (4) für das Laserlichtkebel (3) ist die korrekte Verbindung zwischen Laserlichtkabel (3) und Kabelanschluss (4) durch ein Sicherungselement (8) gesichert und im Strahlengang des Laserstrahls (2) vor dem Kabelanschluss (4) eine durch das Sicherungselement (8) gesteuerte optische Strahlweiche (6) angeordnet, die den Laserstrahl (2) nur in der Sicherungsstellung des Sicherungselements (8) zum Kabelanschluss (4) lenkt.

## Beschreibung

Die vorliegende Erfindung betrifft eine Vorrichtung zum Einkoppeln eines Laserstrahls in ein Laserlichtkabel mit einem Kabelanschluss für das Laserlichtkabel, wobei die korrekte Verbindung zwischen Laserlichtkabel und Kabelanschluss durch ein Sicherungselement gesichert ist, sowie einen Verteiler und ein Festkörper-Lasergerät mit einer oder mehreren solchen Einkoppelvorrichtungen.

Festkörper-Lasergeräte zur Erzeugung hoher Laserleistungen (mehrere 100 W bis kW) sind in der Regel in einen Optikraum und eine Versorgungseinheit unterteilt. Der Optikraum enthält die Pumplichtquellen, den Laserresonator, Strahlführungskomponenten und Einkoppeleinheiten für die Einkopplung des Laserstrahls in ein oder mehrere Laserlichtkabel. Die Versorgungseinheit enthält die zur elektrischen Versorgung, zur Gas- und Wasserversorgung und zur Steuerung notwendigen Komponenten. In den bisher bekannten Lasergeräten ist der Optikraum eine Einheit, die durch eine Haube des Lasergeräts von der Umgebung getrennt wird. Die Haube stellt sicher, dass keine Laserstrahlung unkontrolliert an die Umgebung abgegeben werden kann. Die Haube ist daher mit einem Sicherheitsschalter versehen, der bewirkt, dass beim Öffnen der Haube der Laserresonator ausgeschaltet wird.

Lasergeräte hoher Leistung weisen zumeist mehrere Abgänge für die Laserstrahlung, d.h. mehrere Einkoppeleinheiten zum Anschluss von Laserlichtkabeln, auf. So kann der Laserstrahl über im Lasergerät befindliche Strahlweichen oder -teiler auf mehrere Arbeitsstationen verteilt werden. Die Einkoppeleinheiten zum Anschluss der Laserlichtkabel befinden sich im Optikraum des Lasergeräts. Die angeschlossenen Laserlichtkabel sind durch licht- und luftdichte Durchführungen in der Haube des Optikraums nach außen geführt.

Bei Alterung oder Beschädigung eines Laserlichtkabels muss dieses ausgetauscht werden. Ein Austausch kann ebenfalls notwendig sein, wenn ein Laserlichtkabel anderer Länge an einem Abgang benötigt wird. Zum Ein- bzw. Ausstecken eines Laserlichtkabels an einer Einkoppeleinheit muss an den bisher üblichen Lasergeräten die Haube des Optikraums geöffnet werden. Dabei wird automatisch der Laser abgeschaltet. Außerdem ist der Optikraum vollständig offen gegenüber der Umgebungsluft, so dass Schmutz und Staub ungehindert an die optischen Komponenten gelangen können. Bereits bei bisher bekannten Lasergeräten weisen die Laserlichtkabelstecker Sicherungselemente in Form von elektrischen Kontakten auf, die im eingesteckten Zustand entsprechende Anschlüsse in der Buchse der Einkoppeleinheit kontaktieren und so einen elektrischen Sicherheitskreis schließen. Beim Ziehen des Steckers wird dieser Kontakt unterbrochen, und der Laser schaltet sich ab, so dass für den Anwender keine Gefahr durch austretende Laserstrahlung besteht. Aufgrund der Reaktionszeit des Sicherheitskreises kann es jedoch dazu kommen, dass im Moment des Steckerziehens das Laserlichtkabel durch austretende Laserstrahlung dennoch beschädigt wird.

Es ist daher die Aufgabe der vorliegenden Erfindung, eine Einkoppelvorrichtung der eingangs genannten Art dahingehend weiterzubilden, dass beim Wechsel des Laserlichtkabels das Austreten von Laserlicht sicher verhindert ist, ohne dass dazu die Quelle des Laserlichts abgeschaltet werden muss.

Diese Aufgabe wird erfindungsgemäß dadurch gelöst, dass im Strahlengang des Laserstrahls vor dem Kabelanschluss eine durch das Sicherungselement gesteuerte optische Strahlweiche angeordnet ist, die den Laserstrahl nur in der Sicherungsstellung des Sicherungselements zum Kabelanschluss lenkt, oder dass im Strahlengang des Laserstrahls vor dem Kabelanschluss ein durch ein Sicherungselement gesteuertes Verschlusselement angeordnet ist, das den Laserstrahl nur in der Sicherungsstellung des Sicherungselements zum Kabelanschluss durchlässt.

Das Sicherungselement ist dabei derart mit der Strahlweiche bzw. dem Verschlusselement gekoppelt, dass ein Öffnen des Sicherungselements das Verschließen des Strahlengangs durch das Verschlusselement bzw. eine Weichenstellung der Strahlweiche bewirkt, in der der Laserstrahl fort vom Kabelanschluss, z.B. auf einen Absorber, gelenkt ist. Auf diese Weise wird sichergestellt, dass das Laserlicht nur bei korrekter Verbindung zwischen dem Laserlichtkabel und dem Kabelanschluss in den Kabelanschluss gelenkt wird.

In einer ersten Ausführungsvariante der erfindungsgemäßen Einkoppelvorrichtung ist das Sicherungselement zur Verriegelung der korrekten Verbindung zwischen Laserlichtkabel und Kabelanschluss ausgebildet. Dazu sind vorzugsweise das Laserlichtkabel und der Kabelanschluss in der korrekten Verbindung mittels eines Verriegelungselements aneinander fixiert, weiches nur in einer Freigabestellung des Sicherungselements entriegelbar ist. Auf diese Weise ist sichergestellt, dass beim Wechsel eines Lichtleitkabels zuerst das Sicherungselement in seine Freigabestellung geöffnet werden muss, was das Verschließen des Strahlengangs durch das Verschlusselement bzw. eine Weichenstellung der Strahlweiche bewirkt, in der der Laserstrahl fort vom Kabelanschluss gelenkt ist. Erst dann kann das Verriegelungselement entriegelt und das Laserlichtkabel vom Kabelanschluss entfernt werden. Diese Ausführungsform der Erfindung bietet den Vorteil, dass im Moment des Lösens des Lichtleitkabels aus der Verbindung mit dem Kabelanschluss der Laserstrahl bereits fort vom Kabelanschluss gelenkt ist. Die Kopplung zwischen Sicherungselement und Verriegelungselement ist vorzugsweise mechanisch oder elektrisch ausgebildet. Im ersteren Fall wird das Verriegelungselement durch Öffnen des Sicherungselements mechanisch freigegeben und kann aus seiner Veniegelungsstellung in eine Entriegelungsstellung bewegt werden, so dass das Laserlichtkabel aus dem Kabelanschluss ausgesteckt werden kann. Eine elektrische Kopplung zwischen Sicherungs- und Verriegelungselement erfolgt beispielsweise über eine elektrische Signalleitung und eine Steuereinrichtung, die das Verriegelungselement nur dann für eine Entriegelung freigibt, wenn sich das Sicherungselement nicht in seiner Sicherungsstellung befindet.

Besonders bevorzugt ist ein in den Kabelanschluss eingesteckter Stecker des Laserlichtkabels oder eine an einer Steckbuchse des Kabelanschlusses für den Stecker des Laserlichtkabels vorgesehene Verschlusshülse durch das Verriegelungselement in dessen Verriegelungsstellung arretiert.

In einer zweiten Ausführungsvariante der erfindungsgemäßen Einkoppefvorrichtung ist das Sicherungselement derart ausgebildet, dass es sich beim Unterbrechen der korrekten Verbindung zwischen Laserlichtkabel und Kabelanschluss automatisch öffnet. Das Sicherungselement kann beispielsweise ein am Stecker vorgesehener elektrisch leitender Kontakt sein, der bei korrekter Verbindung zwischen Laserlichtkabel und Kabelanschluss einen an einer Steckerbuchse des Kabelanschlusses angeordneten elektrisch leitenden Kontakt kontaktiert und dadurch die Strahlweiche bzw. das Verschlusselement schaltet.

Das Sicherungselement und die Strahlweiche bzw. das Verschlusselement sind miteinander insbesondere mechanisch oder elektrisch gekoppelt. Im letzteren Fall wird durch Öffnen des Sicherungselements ein der Einkoppelvorrichtung zugehöriger elektrischer Sicherheitskreis geöffnet. Beim Öffnen des Sicherheitskreises wird von einer Steuereinrichtung automatisch die Strahlweiche, die den Laserstrahl in den Kabelanschluss lenkt, auf ihre Stellung überprüft und ggf. geöffnet, so dass der Laserstrahl nicht in den Kabelanschluss, sondern in einen Absorber gelenkt ist; oder es wird von einer Steuereinrichtung automatisch das Verschlusselement auf seine Stellung überprüft und ggf. geschlossen, so dass der Laserstrahl nicht in den Kabelanschluss gelangt.

Bevorzugt sind der Kabelanschluss und die Strahlweiche bzw. das Verschlusselement durch eine Wand voneinander licht- und luftdicht getrennt, so dass die optischen Komponenten, die sich im Strahlengang vor dem Kabelanschluss befinden, beim Wechsel des Laserlichtkabels nicht zugänglich und so vor Beschädigung und Verschmutzung geschützt sind.

Die Erfindung betrifft auch einen Verteiler mit mehreren wie oben ausgebildeten Einkoppelvorrichtungen zum Verteilen eines Laserstrahls auf mehrere Laserlichtkabel. Im Verteiler kann ein Laserstrahl aus einer Laserquelle z.B. über ein Laserlichtkabel an einer Eingangsseite eingekoppelt und danach über Strahlteiler oder -weichen auf mehrere Laserlichtkabel verteilt werden, die auf einer Ausgangsseite angeschlossen sind. Auch bei einem solchen Verteiler ist über die erfindungsgemäßen Einkoppelvorrichtungen sichergestellt, dass der Laserstrahl nicht in ein Laserlichtkabel gerichtet ist, das getauscht werden soll. Jedes am Verteiler angeschlossene Laserlichtkabel kann einzeln ohne Beeinträchtigung der Funktion von weiteren angeschlossenen Laserlichtkabeln ein- bzw. ausgesteckt werden, ohne dass dazu die Laserlichtquelle ausgeschaltet werden muss.

Die Erfindung betrifft schließlich auch ein Festkörper-Lasergerät mit einem in einem Gehäuse angeordneten Laserresonator und mit einer oder mehreren wie oben ausgebildeten Einkoppelvorrichtungen zum Einkoppeln des Laserstrahls des Laserresonators in ein oder mehrere Laserlichtkabel. Dieses erfindungsgemäße Lasergerät hat den wesentlichen Vorteil, dass einzelne Lasedichtkabel gefahrlos für den Anwender ein- oder ausgesteckt werden können, ohne dass dazu der Laser ausgeschaltet werden muss. Auf diese Weise kann während des Wechsels eines Laserlichtkabels an Arbeitsstationen, die über andere Laserlichtkabel mit dem Lasergerät verbunden sind, weitergearbeitet werden. Jedes Laserlichtkabel an jeder beliebigen Einkoppeleinheit des Lasergeräts kann einzeln ohne Beeinträchtigung der Funktion von weiteren Laserlichtkabeln ein- bzw. ausgesteckt werden.

Besonders bevorzugt ist der bzw. jeder Kabelanschluss der einen bzw. der mehreren Einkoppelvorrichtungen außerhalb des Gehäuses, insbesondere außen am Gehäuse, vorgesehen ist. Zum Ein- bzw. Ausstecken eines Laserlichtkabels muss das Gehäuse des Laserresonators, d.h. der schmutzempfindliche Optikraum, nicht mehr geöffnet werden, was für den Anwender geringere Sorgfaltsanforderungen bezüglich Verschmutzung oder Beschädigung von optischen Komponenten bedeutet.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: eine erste Ausführungsform der erfindungsgemäßen Einkoppelvorrichtung;
- Fig. 2: eine zweite Ausführungsform der erfindungsgemäßen Einkoppelvorrichtung;
- Fig. 3: eine dritte Ausführungsform der erfindungsgemäßen Einkoppelvarrichtung;
- Fig. 4: einen Verteiler mit mehreren jeweils wie in Fig. 1 oder Fig. 2 ausgebildeten Einkoppelvorrichtungen; und
- Fig. 5: ein Festkörper-Lasergerät mit mehreren jeweils wie in Fig. 1 oder Fig. 2 ausgebildeten Einkoppelvorrichtungen.

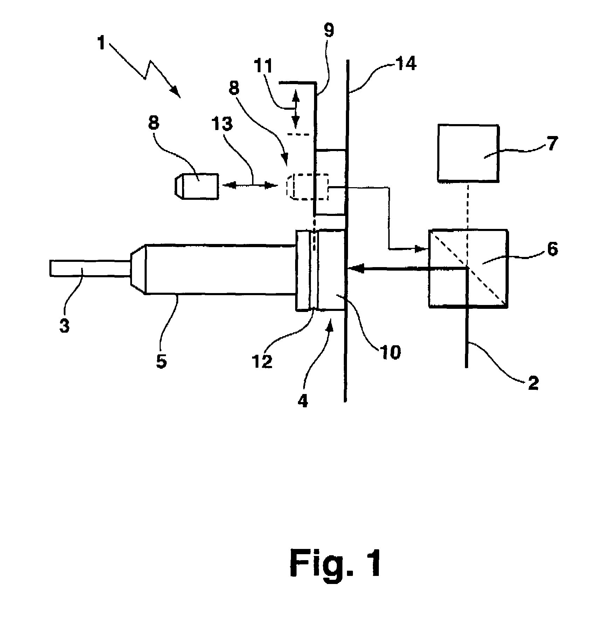

Die in **Fig. 1** gezeigte Vorrichtung **1** dient zum Einkoppeln eines Laserstrahls **2** in ein Laserfichtkabel **3.**

Die Einkoppelvorrichtung **1** umfasst einen hier als Steckbuchse ausgebildeten Kabelanschluss **4,** in den ein Stecker **5** des Laserlichtkabels 3 eingesteckt ist, eine im Strahlengang des Laserstrahls 2 vor dem Kabelanschluss 4 angeordnete optische Strahlweiche **6**, die den Laserstrahl 2 entweder zum Kabelanschluss 4 oder in einen Absorber **7** lenkt, ein Sicherungselement **8** zum Steuern der Strahlweiche 6 sowie ein Verriegelungselement **9** zum Verriegeln der Steckverbindung zwischen Stecker 5 und Kabelanschluss 4.

Der Stecker 5 ist im Kabelanschluss 4 mittels einer auf dem Kabelanschluss 4 verschiebbar geführten Hülse **10** verriegelt, die zum Lösen der Steckverbindung vom Bediener in Richtung Strahlweiche 6 verschoben werden muss. In seiner gestrichelt dargestellten Verriegelungsstellung hindert das in Richtung des Doppelpfeils **11** verschiebbare Verriegelungselement 9 die Hülse 10 an einer Verschiebung, indem das Verriegelungselement 9 in eine umfangsseitig an der Hülse vorgesehene Ringnut **12** eingreift. Das Verriegelungselement 9 ist in seiner Verriegelungsstellung seinerseits durch das als Abziehstecker (Doppelpfeil **13**) ausgebildete Sicherungselement 8 verriegelt. Weiterhin weist die Einkoppelvorrichtung 1 eine Trennwand **14** auf, die den für den Bediener zugänglichen Kabelanschluss 4 und die Strahlweiche 6 licht- und luftdicht voneinander trennt.

Die Funktionsweise der Einkoppelvorrichtung 1 zum Lösen der Steckverbindung ist wie folgt:
Durch Öffnen des Sicherungselements 8, d.h. durch Bewegen (Abziehen) des Sicherungselements 8 aus seiner gestrichelt dargestellten Sicherungsstellung in seine durchgezogen dargestellte Freigabestellung, wird ein der Einkoppelvorrichtung 1 zugehöriger elektrischer Sicherheitskreis (nicht gezeigt) geöffnet. Beim Öffnen des Sicherheitskreises wird automatisch die Strahlweiche 6 auf ihre Stellung geprüft und ggf. geschaltet, so dass der Laserstrahl 2 nicht mehr zum Kabelanschluss 4, sondern in den Absorber 7 gerichtet ist. Durch Öffnen des Sicherungselements 8 wird außerdem die mechanische Verriegelung des Verriegelungselements 9 gelöst, das nun aus seiner gestrichelt dargestellten Verriegelungsstellung in seine durchgezogen dargestellte Entriegelungsstellung bewegt werden kann. In dieser Entriegelungsstellung kann die Hülse 10 in Richtung Strahlweiche 6 verschoben und dadurch das Laserlichtkabel 3 aus dem Kabelanschluss 4 ausgesteckt werden.

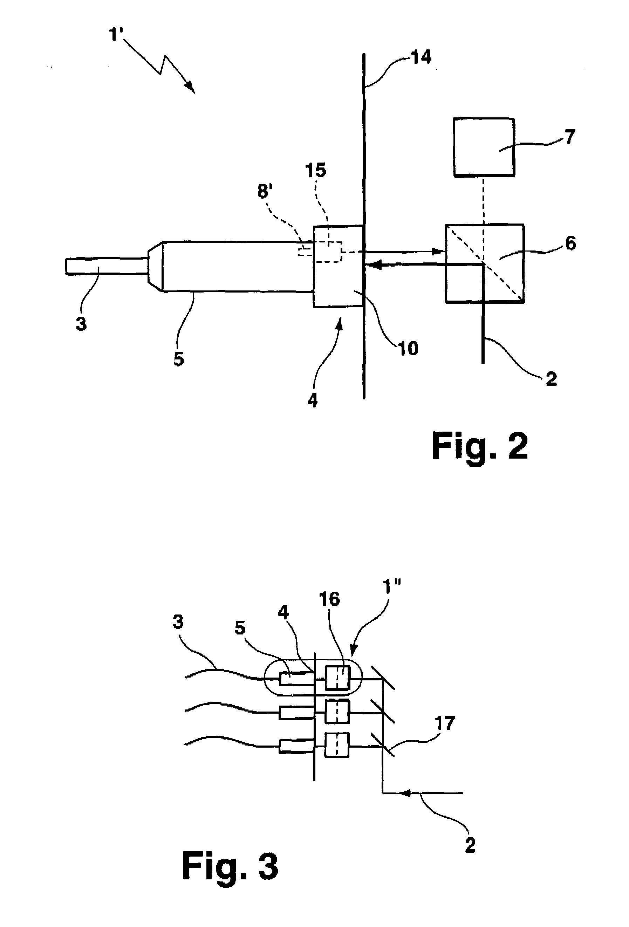

Von der Einkoppelvorrichtung **1** unterscheidet sich die in **Fig. 2** gezeigte Einkoppelvorrichtung 1' einzig dadurch, dass das Sicherungselement **8**' ein am Stecker 5 vorgesehener elektrisch leitender Kontakt ist, der bei korrekter Verbindung zwischen Laserlichtkabel 3 und Kabelanschluss 4 einen an der Steckbuchse des Kabelanschlusses 4 angeordneten elektrisch leitenden Kontakt **15** kontaktiert. Beim Ziehen des Steckers 5, d.h. durch Unterbrechen der korrekten Verbindung zwischen Laserlichtkabel 3 und Kabelanschluss 4, wird die Strahlweiche 6 automatisch auf ihre Stellung geprüft und ggf. geschaltet und somit der Laserstrahl 2 zum Absorber 7 gelenkt.

Bei der in **Fig. 3** gezeigten Einkoppelvorrichtung **1**" ist im Strahlengang des Laserstrahls 2 vor dem Kabelanschluss **4** ein durch das hier nicht gezeigte Sicherungselement 8, 8' gesteuertes Verschlusselement **16** angeordnet, das den Laserstrahl 2 nur in der Sicherungsstellung des Sicherungselements 8, 8' zum Kabelanschluss 4 durchlässt. Das Sicherungselement 8, 8' ist dabei derart mit der dem Verschlusselement 16 gekoppelt, dass ein Öffnen des Sicherungselements das Verschließen des Strahlengangs durch das Verschlusselement 16 bewirkt. Das Verschlusselement 16 ist beispielsweise als eine gekühlte absorbierende Blende oder als ein in den Laserstrahl 2 schwenkbarer Umlenkspiegel ausgeführt, der den Laserstrahl 2 in einen hier nicht gezeigten Absorber umlenkt. Im gezeigten Ausführungsbeispiel wird der Laserstrahl 2 über Strahlteiler **17** auf drei Einkoppelvorrichtungen 1" aufgeteilt.

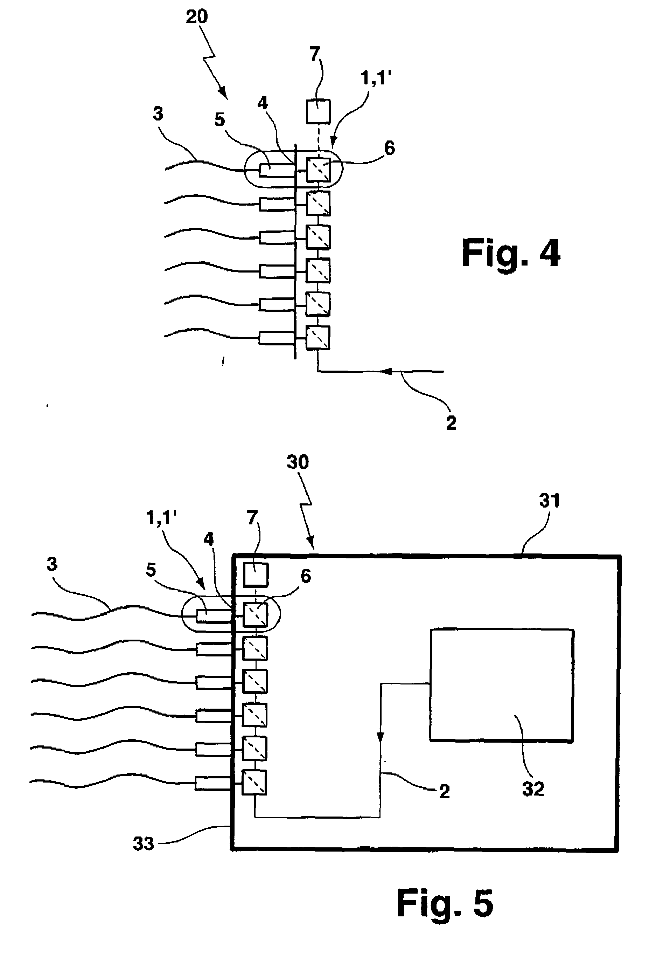

**Fig. 4** zeigt einen Verteiler 20 mit sechs wie in Fig. 1 oder Fig. 2 ausgebildeten Einkoppelvorrichtungen 1,1' zum Verteilen eines Laserstrahls 2 auf die Kabelanschlüsse 4 der Einkoppelvorrichtungen 1, 1'. Die Strahlweichen 6 werden zeitlich nacheinander geschaltet, um den Laserstrahl 2 zeitlich nacheinander auf die jeweils angeschlossenen Laserlichtkabel 3 zu lenken.

**Fig. 5** zeigt schließlich ein Festkörper-Lasergerät **30** mit einem in einem licht- und luftdicht abgeschlossenen Gehäuse (Optikraum) **31** angeordneten Laserresonator **32** und mit sechs wie in Fig. 1 oder Fig. 2 ausgebildeten Einkoppelvorrichtungen 1, 1' zum Verteilen des Laserstrahls 2 des Laserresonators 32 auf die Kabelanschlüsse **4** der Einkoppelvorrichtungen 1, 1'. Alle Optikkomponenten des Lasergeräts 30, wie z.B. Laserresonator 32 und Strahlweichen 6, befinden sich im Gehäuse 31. Die Kabelanschlüsse 4 sind außerhalb des Gehäuses 31, nämlich an einer gedichteten, beispielsweise aus lackiertem Stahl bestehenden Wand 33 des Gehäuses 31, angeordnet und von außen über eine separate Klappe (nicht gezeigt) zugänglich, die während des Laserbetriebs geöffnet werden kann, ohne dass sich dabei der Laser abschaltet.

Es versteht sich, dass der Verteiler 20 und das Festkörper-Lasergerät 30 statt der Einkoppelvorrichtungen 1 oder 1' auch die Einkoppelvorrichtungen 1" aufweisen können, um den Laserstrahls 2 auf die Kabelanschlüsse 4 zu verteilen.

## Patentansprüche

1. Vorrichtung (1, 1', 1") zum Einkoppeln eines Laserstrahls (2) in ein Laserlichtkabel (3), mit einem Kabelanschluss (4) für das Laserlichtkabel (3), wobei die korrekte Verbindung zwischen Laserlichtkabel (3) und Kabelanschluss (4) durch ein Sicherungselement (8, 8') gesichert ist,
**dadurch gekennzeichnet,**
**dass** im Strahlengang des Laserstrahls (2) vor dem Kabelanschluss (4) eine durch das Sicherungselement (8, 8') gesteuerte optische Strahlweiche (6) angeordnet ist, die den Laserstrahl (2) nur in der Sicherungsstellung des Sicherungselements (8, 8') zum Kabelanschluss (4) lenkt, oder dass im Strahlengang des Laserstrahls (2) vor dem Kabelanschluss (4) ein durch das Sicherungselement (8, 8') gesteuertes Verschlusselement (16) angeordnet ist, das den Laserstrahl (2) nur in der Sicherungsstellung des Sicherungselements (8, 8') zum Kabelanschluss (4) durchlässt.

2. Einkoppelvorrichtung nach Anspruch 1, **dadurch gekennzeichnet, dass** das Sicherungselement (8) zur Verriegelung der korrekten Verbindung zwischen Laserlichtkabel (3) und Kabelanschluss (4) ausgebildet ist.

3. Einkoppelvorrichtung nach Anspruch 2, **dadurch gekennzeichnet, dass** das Laserlichtkabef (3) und der Kabelanschluss (4) in der korrekten Verbindung mittels eines Verriegelungselements (9) aneinander fixiert sind, welches nur in einer Freigabestellung des Sicherungselements (8) entriegelbar ist.

4. Einkoppelvorrichtung nach Anspruch 3, **dadurch gekennzeichnet, dass** das Sicherungselement (8) und das Verriegelungselement (9) miteinander elektrisch oder mechanisch gekoppelt sind.

5. Einkoppelvorrichtung nach Anspruch 3 oder 4, **dadurch gekennzeichnet, dass** ein in den Kabelanschluss (4) eingesteckter Stecker (5) des Laserlichtkabels (3) oder eine an einer Steckbuchse des Kabelanschlusses (4) für den Stecker (5) des Laserlichtkabeis (3) vorgesehene Verschlusshülse (10) durch das Verriegelungselement (9) in dessen Verriegelungsstellung arretiert ist.

6. Einkoppelvorrichtung nach Anspruch 1, **dadurch gekennzeichnet, dass** das Sicherungselement (8') derart ausgebildet ist, das es sich beim Unterbrechen der korrekten Verbindung zwischen Laserlichtkabel (3) und Kabelanschluss (4) automatisch öffnet.

7. Einkoppelvorrichtung nach Anspruch 6, **dadurch gekennzeichnet, dass** das Sicherungselement (8') ein am Laserlichtkabel (3) vorgesehener elektrisch leitender Kontakt ist, der bei korrekter Verbindung zwischen Laserlichtkabel (3) und Kabelanschluss (4) einen an einer Steckbuchse des Kabelanschlusses (4) angeordneten elektrisch leitenden Kontakt kontaktiert.

8. Einkoppelvorrichtung nach einem der vorhergehenden Ansprüche, **dadurch gekennzeichnet, dass** das Sicherungselement (8, 8') und die Strahlweiche (6) bzw. das Verschlusselement (16) miteinander elektrisch oder mechanisch gekoppelt sind.

9. Einkoppelvorrichtung nach einem der vorhergehenden Ansprüche, **gekennzeichnet durch** einen Absorber (7) für den fort vom Kabelanschluss (4) gelenkten Laserstrahl (2).

10. Einkoppelvorrichtung nach einem der vorhergehenden Ansprüche, **dadurch gekennzeichnet, dass** der Kabelanschluss (4) und die Strahlweiche (6) bzw. das Verschlusselement (16) durch eine Wand (14) voneinander licht- und luftdicht getrennt sind.

11. Verteiler (20) zum Verteilen eines Laserstrahls (2) auf mehrere Laserlichtkabel (3) mit jeweils einer Einkoppelvorrichtung (1, 1', 1") nach einem der vorhergehenden Ansprüche für jedes Laserlichtkabel (3).

12. Festkörper-Lasergerät (30) mit einem in einem Gehäuse (31) angeordneten Laserresonator (32) und mit einer oder mehreren Einkoppelvorrichtungen (1, 1', 1") nach einem der Ansprüche 1 bis 10 zum Einkoppeln des Laserstrahls (2) des Laserresonators (32) in ein oder mehrere Laserlichtkabel (3).

13. Festkörper-Lasergerät nach Anspruch 12, **dadurch gekennzeichnet, dass** der bzw. jeder Kabelanschluss (4) der einen bzw. der mehreren Einkoppelvorrichtungen (1, 1', 1") außerhalb des Gehäuses (31), insbesondere außen am Gehäuse (31), vorgesehen ist.
